Europäisches Patentamt

European Patent Office

Office européen des brevets

(19)

(11) Veröffentlichungsnummer : **0 054 275**
**B1**

(12) **EUROPÄISCHE PATENTSCHRIFT**

(45) Veröffentlichungstag der Patentschrift :
03.04.85

(21) Anmeldenummer : 81110362.1

(22) Anmeldetag : 11.12.81

(51) Int. Cl.[4] : **B 65 D  5/18, B 31 B  1/52,
B 31 B  1/64, B 42 F  7/00,
B 42 F 17/08, G 11 B 23/02**

(54) Verfahren und Vorrichtung zum Aufrichten und Versiegeln einer einseitig offenen Falthülle aus Karton.

(30) Priorität : 13.12.80 DE 3047056

(43) Veröffentlichungstag der Anmeldung :
23.06.82 Patentblatt 82/25

(45) Bekanntmachung des Hinweises auf die Patenterteilung : 03.04.85 Patentblatt 85/14

(84) Benannte Vertragsstaaten :
AT BE CH DE FR GB IT LI LU NL SE

(56) Entgegenhaltungen :
CH-A-  272 727
DE-A- 2 723 016
DE-C-  913 158
GB-A-   16 665
US-A- 3 949 928
US-A- 3 956 865

(73) Patentinhaber : 4P Nicolaus Kempten GmbH
Ulmer Strasse 18
D-8960 Kempten (DE)

AGFA-GEVAERT Aktiengesellschaft
D-5090 Leverkusen 1 (DE)

(72) Erfinder : Detzel, Josef
Widdumring 4
D-8961 Weitnau (DE)
Erfinder : Gorbach, Wilhelm
Im Oberwies 4
D-8960 Kempten (DE)
Erfinder : Thiele, Hartmut
Herterichstrasse 83
D-8000 München 71 (DE)

(74) Vertreter : Hutzelmann, Gerhard
Ulmer Strasse 18 Postfach 26 80
D-8960 Kempten/Allgäu (DE)

## Beschreibung

Die Erfindung betrifft ein Verfahren zum Aufrichten einer einseitig offenen Falthülle, die zum Einschieben eines festen rechteckigen Gegenstandes, wie z. B. eines Buches oder einer Kassette dient, mit zwei Seiten- sowie zwei Stirnwänden und mit einem Rücken, an dem über je eine Faltlinie eine Außenlage jeder der beiden Seitenwände angelenkt ist, wobei an den Außenlagen über je eine Faltlinie eine Innenlage der entsprechenden Seitenwand angeordnet ist, an denen Lappen zur Bildung der Stirnwände vorgesehen sind, und von denen eine mit einer weiteren Rücken-Lage versehen ist, wobei vom flachliegenden Kartonzuschnitt ausgehend zuerst die Innenlagen der Seitenwände auf die zugehörigen Außenlagen und die weitere Rücken-Lage auf den Rücken aufgefaltet werden.

Aus der US-A-3 949 928 ist eine Falthülle bekannt, die aber — wie sich in der Praxis erwiesen hat — nur äußerst umständlich vom flachliegenden Zustand ausgehend aufzurichten ist. Maschinell ist dieses Aufrichten fast überhaupt nicht durchführbar, so daß eine derart ausgebildete Falthülle für die Herstellung großer Stückzahlen nicht einsetzbar ist.

Auch aus der DE-C-913 158 ist eine Faltschachtel bekannt, deren Aufrichten weitgehend von Hand durchgeführt werden muß.

Der Erfindung liegt die Aufgabe zugrunde, ein Verfahren und eine Vorrichtung zu schaffen, mit denen auf einfache und insbesondere rationelle Weise die eingangs beschriebene Falthülle aufzurichten ist.

Diese Aufgabe wird erfindungsgemäß dadurch gelöst, daß der Kartonzuschnitt mit den Außenlagen nach unten einer Aufrichtestation zugeführt wird, in welcher der Zuschnitt entlang einer Faltlinie gehalten wird, die zwischen dem Rücken und der Außenlage der einen Seitenwand bzw. der Rückenlage und der Innenlage dieser Seitenwand verläuft, worauf diese Seitenwand um vorzugsweise etwa 30° nach unten gebogen wird, wodurch zwischen dem Rücken und der Rückenlage an deren freiem Ende ein Spalt entsteht, in den ein Werkzeug eingreift, um diesen Spalt offenzuhalten, und daß anschließend die genannte Seitenwand zurück- und um 90° nach oben gebogen wird, wobei auch die an den beiden Seitenwand-Lagen angelenkten Stirnwand-Lappen mit nach oben umgefaltet werden, während die an den mit der Außenlage verbundenen äußeren Stirnwand-Lappen angelenkten Staubklappen in ihrer horizontalen Lage verbleiben, woraufhin diese Stirnwand-Lappen um ebenfalls 90° gegen die andere Seitenwand umgefaltet werden, wobei die Staubklappen in den noch immer offengehaltenen Spalt zwischen dem Rücken und der Rücken-Lage eingeschoben werden und daß die Stirnwand-Lappen der anderen Seitenwand um 90° hochgefaltet und dann diese zweite Seitenwand ebenfalls um 90° nach oben umgebogen wird, wobei die an dieser angelenkten Stirnwand-Lappen zwischen die Stirnwand-Lappen eingesteckt werden, worauf die Falthülle einer Siegelstation zugeführt wird.

Sehr vorteilhaft ist es auch, wenn erfindungsgemäß die Falthülle nach ihrem Aufrichten zwischen zwei an ihren Seitenwänden angreifenden Halteschienen eingeschoben wird, wobei an der Außenseite des Rückens eine weitere Halteschiene vorgesehen ist, daß dann ein Oberstempel von oben in die Falthülle eingefahren wird, der nach Erreichen seiner ersten Einfahrstufe das seitliche Ausfahren der unteren Halteschiene einleitet, worauf der Oberstempel die Falthülle weitertransportiert und beim Erreichen seiner unteren Endstellung einen Unterstempel einschaltet, der sich dann gegen den Rücken der Falthülle bewegt und in seiner Anlageposition an der Falthülle zwei Seitenwand-Stempel einschaltet, die sich dann gegen die Seitenwände bewegen und in ihrer Endstellung den Unterstempel abschalten, worauf sich dieser von der Falthülle entfernt und zwei weitere an den Stirnwänden angreifende Stempel eingeschaltet werden, die in ihrer Anlagestellung den Unterstempel wieder einschalten, so daß zum endgültigen Siegeln alle Stempel gleichzeitig an der Falthülle angreifen.

Hiermit ist ein sehr vorteilhaftes Siegel-Verfahren für die aufgerichtete Falthülle geschaffen, das in sinnvoller Ergänzung des Aufrichteverfahrens ablaufen kann. Es hat sich als äußerst vorteilhaft erwiesen, da alle Wandlagen bzw. Lappen in die richtige Lage zueinander gebracht werden und dann alle Lagen gleichzeitig gesiegelt werden.

Eine Vorrichtung zum Aufrichten einer einseitig offenen Falthülle, die zum Einschieben eines festen, rechteckigen Gegenstandes, wie z. B. eines Buches oder einer Kassette dient, mit zwei Seiten- sowie zwei Stirnwänden und mit einem Rücken, an den über je eine Faltlinie eine Außenlage jeder der beiden Seitenwände angelenkt ist, wobei an den Außenlagen über je eine Faltlinie eine Innenlage der entsprechenden Seitenwand angeordnet ist, an denen Lappen zur Bildung der Stirnwände vorgesehen sind und von denen eine mit einer weiteren Rücken-Lage versehen ist, ist erfindungsgemäß dadurch gekennzeichnet, daß die Aufrichte-Vorrichtung mit einem oberen Stempel versehen ist, dessen untere Kante schneidenförmig ausgebildet ist und den flachliegenden, entlang der beiden Faltlinien zwischen Innen- und Außenlage der Seitenwände zusammengelegten Zuschnitt entlang der Faltlinie zwischen dem Rücken bzw. der Rücken-Lage einerseits und der angrenzenden Seitenwand andererseits, festzuhalten vermag, und daß ein am freien Ende dieser Seitenwand angreifender Hebel vorgesehen ist, welcher die Seitenwand von der Horizontalen ausgehend wenigstens geringfügig nach unten zu biegen vermag, wodurch die Rücken-Lage mit ihrem freien Ende sich vom Rücken entfernt, und daß ein keilförmiger Schieber vorgesehen ist, der in den zwischen Rücken und Rücken-Lage gebildeten Spalt eingeschoben werden kann, daß ferner ein Hebel vorgesehen ist, welcher die genannte Seitenwand um 90° umzubiegen vermag, wobei an diesem Hebel beiderseits Klappen vorgesehen sind, welche zum Umfalten der Stirnwand-Lappen dieser Seitenwand dienen, und daß ein Traghebel vorgesehen ist, welcher die andere Seitenwand ebenfalls um 90° nach oben zu falten vermag und der Klappen trägt, die zum Umschwenken der Stirnwand-Lappen dieser zweiten Seitenwand dienen.

Mit einer derart einfach aufgebauten Vorrichtung ist ein sicherer und schneller Ablauf des Aufrichte- und des Versiegelungsvorganges gewährleistet.

In der Zeichnung sind Ausführungsbeispiele der Erfindung veranschaulicht. Dabei zeigen :

Figur 1  ein Schaubild einer fertigen Falthülle,

Figur 2  eine Ansicht eines flachliegenden Kartonzuschnittes, aus dem die Falthülle aufgerichtet wird,

Figur 3  eine Ansicht eines teilweise gefalteten Zuschnitts,

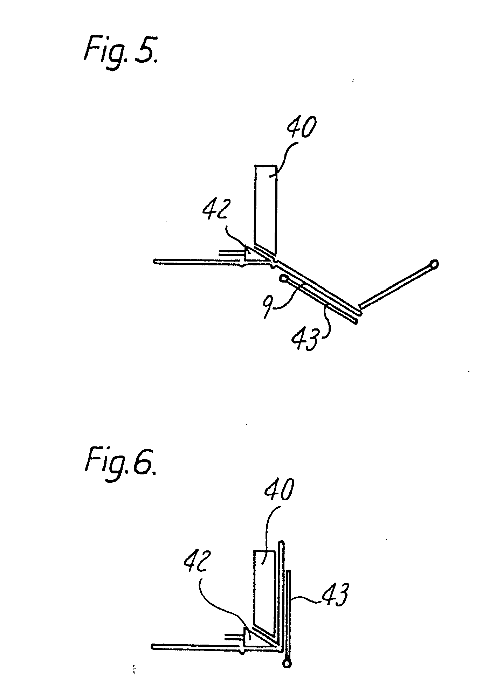

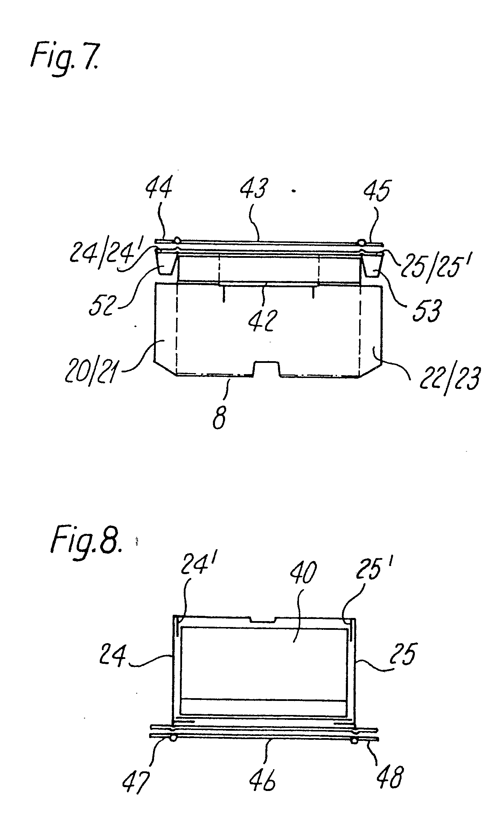

Figur 4 bis Figur 8  Einzelheiten einer Vorrichtung zum Aufrichten der Falthülle in schematischer Darstellung,

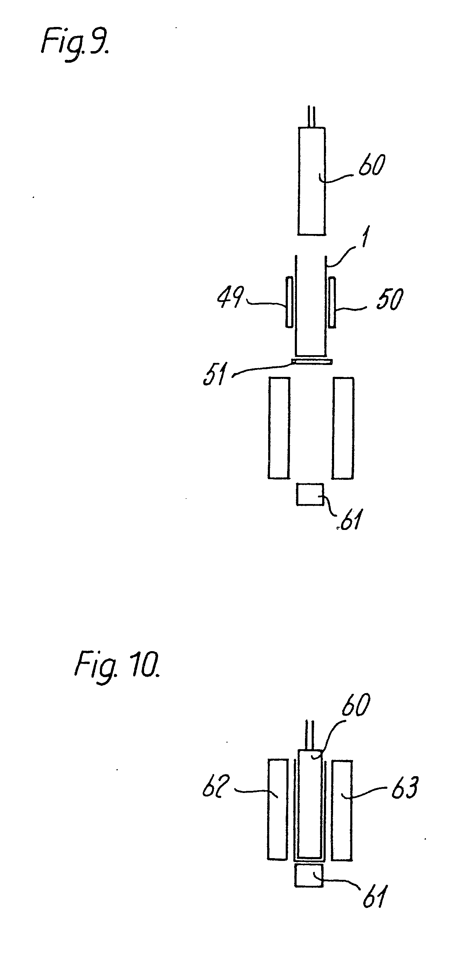

Figur 9  bis  Figur 11  schematische Darstellungen einer Siegeleinrichtung mit den verschiedenen Stempeln und

Figur 12  ein Ablaufdiagramm der Ein- und Ausschaltphasen der Stempel dieser Siegeleinrichtung.

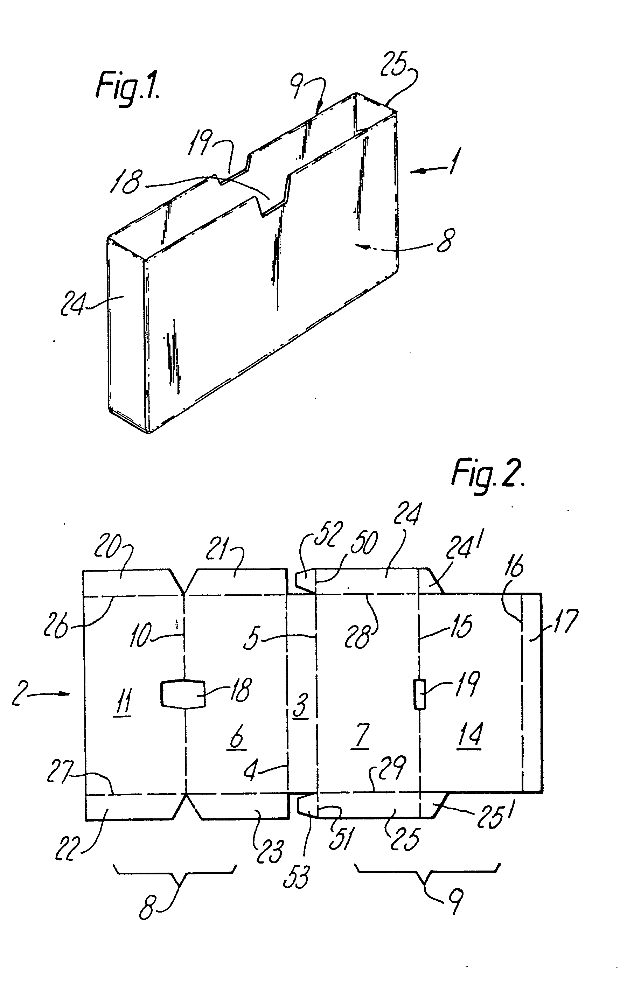

Mit 1 ist in Fig. 1 eine Falthülle bezeichnet, die aus einem Kartonzuschnitt 2 durch Falten hergestellt ist. In Fig. 2 ist der Kartonzuschnitt im flachliegenden Zustand dargestellt. Er weist einen Rücken 3 auf, an dem beiderseits über je eine Faltlinie 4, 5 eine Außenlage 6 bzw. 7 einer Seitenwand 8 bzw. 9 angelenkt ist. An der Außenlage 6 ist über eine weitere Faltlinie 10 eine Innenlage 11 der Seitenwand 8 angeordnet. Eine Innenlage 14 ist auch an der anderen Seitenwand 9 vorgesehen und über eine Faltlinie 15 mit der Außenlage 7 dieser Seitenwand verbunden. Eine über eine Faltlinie 16 an der Innenlage 14 angeformte Rücken-Lage 17 dient zur Verstärkung des Rückens 3. Die beiden Faltlinien 10 und 15, welche die Verbindung zwischen den beiden Lagen der Seitenwände darstellen, sind durch je eine Aussparung 18 und 19 unterbrochen. Im aufgerichteten Zustand der Falthülle 1 ergeben diese Aussparungen 18 und 19 Grifflöcher zum Erleichtern des Herausnehmens eines in die Falthülle hineingesteckten Gegenstandes. Sie dienen darüber hinaus dem Ablassen des beim Versiegeln zwischen Innen- und Außenlage der Seitenwände entstehenden Dampfes.

An beiden Lagen 6 und 11 bzw. 7 und 14 der beiden Seitenwände 8 und 9 sind Lappen 20, 21, 22, 23 bzw. 24, 24' und 25, 25' angeformt und durch Biegelinien 26, 27 bzw. 28, 29 von den beiden Lagen 7 und 14 der Seitenwand 9 erstreckt sich auch über die beiden an dieser Seitenwand engeformten Lappen und unterteilt diese in je einen der Innen- und der Außenlage zugeordneten Abschnitt 24 und 24' bzw. 25 und 25'.

Die Faltlinie 5 setzt sich auch in den Lappen 24 und 25 fort, wo die Faltlinienabschnitte 50 und 51 vorgesehen sind, die zur Anlenkung von Staubklappen 52 bzw. 53 an den Lappen 24 und 25 dienen.

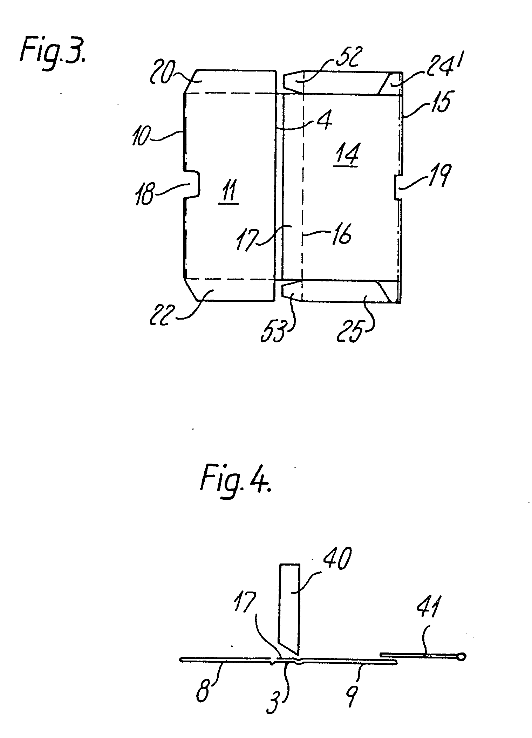

Beim Aufrichten der Falthülle werden zuerst die beiden Innenlagen 11 und 14 auf die entsprechenden Außenlagen 6 und 7 aufgefaltet. In diesem in Fig. 3 dargestellten, noch immer flachliegenden Zustand, kann die Falthülle beim Verpacker angeliefert werden. Es ist jedoch auch möglich, die Falthülle nochmals um die Faltlinie 16 bzw. 5 um etwa 180° umzuknicken und in diesem Zustand einer weiteren Aufrichtestation zuzuführen.

Das Vorfalten der Falthülle in den in Fig. 3 gezeigten bzw. auch den nochmals um 180° zusammengelegten Zustand erfolgt zweckmäßigerweise auf einer nicht dargestellten schnell laufenden Maschine. Insbesondere wenn die Falthülle mit den zusätzlichen Staubklappen 52, 53 ausgerüstet ist, hat es sich als vorteilhaft erwiesen, von dem um 180° zusammengefalteten Zustand auszugehen, dabei werden dann zweckmäßigerweise auch die Staubklappen 52, 53 und die weitere Rücken-Lage 17 um diese 180° umgefaltet. Zum Einsetzen der Falthülle in die Siegeleinrichtung wird die Seitenwand 9 um 90° zurückgefaltet. Die Faltung der Rücken-Lage 17 geht dabei um erheblich weniger als auf 90° auf, während die Faltung der Staubklappen 52, 53 um nahe 90° zurückgeht. Beim Umfalten der Stirnwand-Lappen 24, 24' und 25, 25' kommen daher die Staubklappen zwangsläufig zwischen den Rücken 3 und die weitere Rücken-Lage 17 zu liegen.

Es ist jedoch auch möglich, den in Fig. 3 dargestellten Zuschnitt einer Aufrichtestation zuzuführen, in welcher er mit den Außenlagen der Seitenwände nach unten von einem Stempel 40 gehalten wird, der entlang der Faltlinie 16 angreift, welche die Rücken-Lage 17 mit der Innenlage 14 der Seitenwand 9 verbindet. Dabei ist diese Faltlinie 16 deckungsgleich mit der Faltlinie 5 zwischen dem Rücken 3 und der Außenlage 7 dieser Seitenwand. Sobald der Kartonzuschnitt festliegt, wird die Seitenwand 9 durch einen Hebel 41 um etwa 30° nach unten gebogen, wodurch sich das freie Ende der Rücken-Lage 17 vom Rücken 3 abhebt und zwischen beiden ein Spalt entsteht. In diesen Spalt greift ein keilförmiger Schieber 42 ein, um ihn offenzuhalten. Daraufhin wird die Seitenwand 9 von einem weiteren Hebel 43 nach oben gebogen. Sobald die Seitenwand 9 senkrecht nach oben zeigt, werden am Hebel 43 seitlich angelenkte Klappen 44 und 45 um 90° zur Falthülle hin umgeklappt, wodurch die Stirnwand-Lappen 24, 24' und 25, 25' ebenfalls um 90° umgebogen werden. Die an diesen Stirnwand-Lappen angelenkten Staubklappen 52 und 53 werden dabei in den vom Schieber 42 offengehaltenen Spalt zwischen Rücken 3 und Rücken-Lage 17 eingeführt. Sobald dies geschehen ist, wird der keilförmige Schieber 42 herausgezogen und die Stirnwand-Lappen 20, 21 und 22, 23 werden durch zwei gelenkig an einem Traghebel 46 gelagerte Klappen 47 und 48 um 90° nach oben geschwenkt. Daraufhin wird auch der Traghebel 46 mit der darauf liegenden Seitenwand 8 nach oben geschwenkt, so daß auch diese Seitenwand 8 senkrecht nach oben steht. Bei diesem Hochschwenken der Seitenwand 8 werden die Stirnwand-Lappen 20 und 21 zwischen die Stirnwand-Lappen 24 und 24' und die Stirnwand-Lappen 22 und 23 zwischen die Stirnwand-Lappen 25 und 25' eingeführt. Als nächstes wird der Stempel 40 aus der Falthülle 1 herausgezogen und diese in eine Siegelstation geschoben.

In dieser Siegelstation sind auf der gleichen Ebene wie die Aufrichtestation zwei Halteschienen 49, 50, zwischen welche die Falthülle 1 eingeschoben wird. Sie ruht dabei auf einer Halteleiste 51.

Oberhalb der Falthülle ist ein Oberstempel 60 angeordnet, der in einem ersten Schritt vollständig in die Falthülle einfährt. Sodann wir die Halteleiste 51 ausgefahren und der Oberstempel 60 fährt mit der Falthülle in die eigentliche Siegelstation ein. Daraufhin wird ein Unterstempel 61 eingeschaltet, so daß die Falthülle zwischen Oberstempel 60 und Unterstempel 61 eingeklemmt ist. In beiden Stempeln ist dabei die Heizung bereits eingeschaltet, wodurch eine Vorwärmung aber noch keine Siegelung erfolgt. Als nächster Schritt werden zwei Seitenwand-Stempel 62 und 63 eingeschaltet, die ebenfalls gegen die Falthülle fahren. Sobald diese dort angelangt sind, wird der Unterstempel 61 wieder abgeschaltet und gibt den Rücken 3 der Falthülle frei. Die dann aktivierten, an den Stirnwänden angreifenden Stempel 64 und 65 schalten den Unterstempel 61 wieder ein, so daß abschließend alle Stempel eingeschaltet sind und ein gemeinsames Siegeln aller Wände der Falthülle erfolgt.

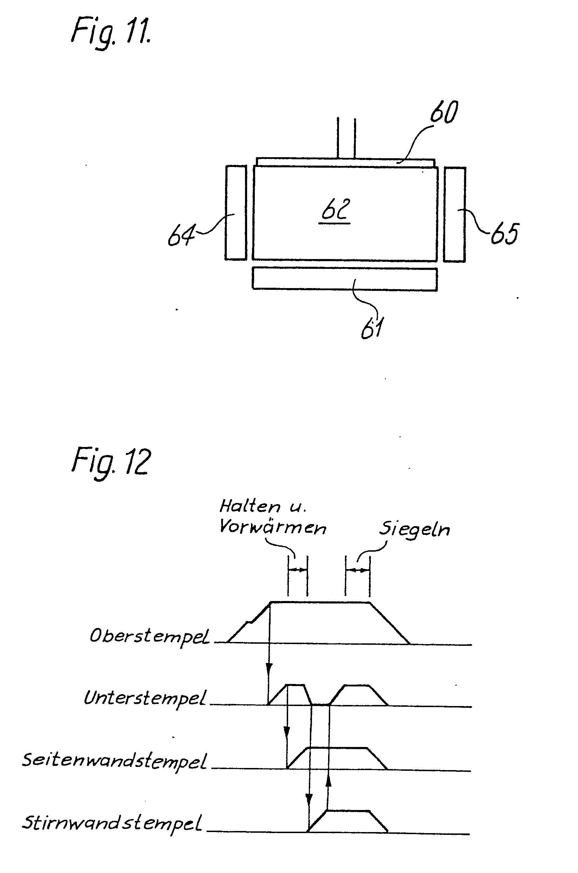

Die Ein- und Ausschaltphasen der einzelnen Stempel sind besonders aus dem in Fig. 12 dargestellten Ablaufdiagramm ersichtlich.

Das nochmalige Abheben des Unterstempels hat den Zweck, daß beim Anlegen der Stempel 64 und 65 an die Stirnwände die an diesen befestigten Staubklappen vollständig zwischen Rücken 3 und Rücken-Lage 17 eingedrückt werden können.

## Ansprüche

1. Verfahren zum Aufrichten einer einseitig offenen Falthülle (1), die zum Einschieben eines festen, rechteckigen Gegenstandes, wie z. B. eines Buches oder einer Kassette dient, mit zwei Seiten (8, 9) sowie zwei Stirnwänden (24, 25) und mit einem Rücken (3), an dem über je eine Faltlinie eine Außenlage jeder der beiden Seitenwände angelenkt ist, wobei an den Außenlagen über je eine Faltlinie eine Innenlage der entsprechenden Seitenwand angeordnet ist, an denen Lappen zur Bildung der Stirnwände vorgesehen sind, und von denen eine mit einer weiteren Rücken-Lage versehen ist, wobei vom flachliegenden Kartonzuschnitt ausgehend zuerst die Innenlagen der Seitenwände auf die zugehörigen Außenlagen und die weitere Rücken-Lage auf den Rücken aufgefaltet werden, dadurch gekennzeichnet, daß der Kartonzuschnitt (2) mit den Außenlagen nach unten einer Aufrichtestation zugeführt wird, in welcher der Zuschnitt entlang einer Faltlinie gehalten wird, die zwischen dem Rücken (3) und der Außenlage (7) der einen Seitenwand (9) bzw. der Rückenlage (17) und der Innenlage (14) dieser Seitenwand verläuft, worauf diese Seitenwand um vorzugsweise etwa 30° nach unten gebogen wird, wodurch zwischen dem Rücken (3) und der Rückenlage (17) an deren freiem Ende ein Spalt entsteht, in den ein Werkzeug eingreift, um diesen Spalt offenzuhalten, und daß anschließend die genannte Seitenwand zurück- und um 90° nach oben gebogen wird, wobei auch die an den beiden Seitenwand-Lagen angelenkten Stirnwand-Lappen (24, 24'; 25, 25') mit nach oben umgefaltet werden, während die an den mit der Außenlage (7) verbundenen äußeren Stirnwand-Lappen (24, 25) angelenkten Staubklappen (52, 53) in ihrer horizontalen Lage verbleiben, woraufhin diese Stirnwand-Lappen (24, 24'; 25, 25') um ebenfalls 90° gegen die andere Seitenwand (8) umgefaltet werden, wobei die Staubklappen (52, 53) in den noch immer offengehaltenen Spalt zwischen dem Rücken (3) und der Rücken-Lage (17) eingeschoben werden, und daß die Stirnwand-Lappen (20, 21, 22, 23) der anderen Seitenwand (8) um 90° hochgefaltet und dann diese zweite Seitenwand (8) ebenfalls um 90° nach oben umgebogen wird, wobei die an dieser angelenkten Stirnwand-Lappen (20, 21, bzw. 22, 23) zwischen die Stirnwand-Lappen (24, 24', bzw. 25, 25') eingesteckt werden, worauf die Falthülle einer Siegelstation zugeführt wird.

2. Verfahren nach Anspruch 1, dadurch gekennzeichnet, daß die Falthülle nach ihrem Aufrichten zwischen zwei an ihren Seitenwänden (8, 9) angreifenden Halteschienen eingeschoben wird, wobei an der Außenseite des Rückens eine weitere Halteschiene vorgesehen ist, daß dann ein Oberstempel (60) von oben in die Falthülle eingefahren wird, der nach Erreichen seiner ersten Einfahrstufe das seitliche Ausfahren der unteren Halteschiene einleitet, worauf der Oberstempel die Falthülle weitertransportiert und beim Erreichen seiner unteren Endstellung einen Unterstempel (61) einschaltet, der sich dann gegen den Rücken der Falthülle bewegt und in seiner Anlageposition an der Falthülle zwei Seitenwand-Stempel (62, 63) einschaltet, die sich dann gegen die Seitenwände bewegen und in ihrer Endstellung den Unterstempel abschalten, worauf sich dieser von der Falthülle entfernt und zwei weitere an den Stirnwänden angreifende Stempel (64, 65) eingeschaltet werden, die in ihrer Anlagestellung den Unterstempel ·wieder einschalten, so daß zum endgültigen Siegeln alle Stempel gleichzeit an der Falthülle angreifen.

3. Vorrichtung zum Aufrichten einer einseitig offenen Falthülle (1), die zum Einschieben eines festen, rechteckigen Gegenstandes, wie z. B. eines Buches oder einer Kassette dient, mit zwei Seiten (8, 9) — sowie zwei Stirnwänden (24, 25) und mit einem Rücken (3), an den über je eine Faltlinie eine Außenlage jeder der beiden Seitenwände angelenkt ist, wobei an den Außenlagen über je eine Faltlinie eine Innenlage der entsprechenden Seitenwand angeordnet ist, an denen Lappen zur Bildung der Stirnwände vorgesehen sind und von denen eine mit einer weiteren Rücken-Lage versehen ist, dadurch gekennzeichnet, daß die Aufrichte-Vorrichtung mit einem oberen Stempel (40) versehen ist, dessen untere Kante schneidenförmig ausgebildet ist und den flachliegenden entlang der beiden Faltlinien zwischen Innen- und Außenlage der Seitenwände (8, 9) zusammengelegten Zuschnitt entlang der Faltlinie (5, bzw. 16) zwischen dem Rücken (3) bzw. der Rücken-Lage (17) einerseits und der angrenzenden Seitenwand (9) andererseits, festzuhalten vermag, und daß ein am freien Ende dieser Seitenwand (9) angreifender Hebel (41) vorgesehen ist, welcher die Seitenwand von der Horizontalen ausgehend wenigstens geringfügig nach unten zu biegen vermag, wodurch die Rücken-Lage (17) mit ihrem freien Ende sich vom Rücken (3) entfernt, und daß ein keilförmiger Schieber (42) vorgesehen ist, der in den zwischen Rücken (3) und Rücken-Lage (17) gebildeten Spalt eingeschoben werden kann, daß ferner ein Hebel (43) vorgesehen ist, welcher die genannte Seitenwand (9) um 90° umzubiegen vermag, wobei an diesem Hebel (43) beiderseits Klappen (44, 45) vorgesehen sind, welche zum Umfalten der Stirnwand-Lappen (24, 24', bzw. 25, 25') dieser Seitenwand dienen, und daß ein Traghebel (46) vorgesehen ist, welcher die andere Seitenwand (8) ebenfalls um 90° nach oben zu falten vermag und der Klappen (47, 48) trägt, die zum Umschwenken der Stirnwand-Lappen (20, 21 ; 22, 23) dieser zweiten Seitenwand dienen.

## Claims

1. A process for the erection of a folded sleeve (1) open on one side to permit the insertion of a solid, rectangular object such as a book or a cassette, with two side panels (8, 9), two end panels (24, 25) and a spine (3) ; the outer wall of each of the two side panels is hinged to the spine by means of a folding line and the inner wall of each side panel is hinged to the relevant outer wall by means of a further folding line ; both edges of the inner and outer walls of the two side panels have flaps for the formation of the end panels and one of the inner walls has a further spine section hinged to it ; the process begins with a flat board blank, from which first of all the inner walls of the side panels are folded over on to their respective outer walls and the further spine section is folded over on to the spine, wherein the board blank (2) with the outer walls facing downwards is fed into an erecting device in which the blank is held along a folding line located between the spine (3) and the outer wall (7) of one side panel (9) and between the further spine section (17) and the inner wall (14) of this side panel ; this side panel is then bent downwards, preferably by about 30°, which means that a gap is formed between the spine (3) and the further spine section (17) at the open end of the same, into which a tool is inserted in order to keep the gap open ; the side panel is then folded back and up through 90°, with the result that the end panel flaps (24, 24' ; 25, 25') hinged to the walls of the side panels are also folded upwards, whilst the dust flaps (52, 53) hinged to the outside end panel flaps (24, 25) that are connected to the outer wall (7) remain in their horizontal position ; these end panel flaps (24, 24' ; 25, 25') are then folded — again through 90° — against the other side panel (8), which has the effect that the dust flaps (52, 53) are tucked into the gap that has been kept open between the spine (3) and the further spine section (17) ; the end panel flaps (20, 21, 22, 23) hinged to the other side panel (8) are folded up through 90°, after which this second side panel (8) is also folded upwards through 90° ; as a result, the end panel flaps (20, 21 ; 22, 23) hinged to this side panel are tucked between the end panel flaps (24, 24' ; 25, 25') ; following this, the folded sleeve moves on to a sealing station.

2. A process according to claim 1, wherein the erected folded sleeve is inserted between two holding plates that engage its side panels (8, 9) whilst a further holding plate is positioned against the outside of the spine ; an upper tool (60) then moves into the folded sleeve from above and when it has reached a specified position it causes the lower holding plate to move away to the side ; the upper tool then transports the folded sleeve further and when it has reached its lowest position it actuates a lower tool (61), which then moves into position against the spine of the folded sleeve ; when the lower tool has reached its predetermined position with relation to the folded sleeve, it actuates two side panel tools (62, 63) which move towards the side panels, switching off the lower tool when they reach their final position ; the lower tool then moves away from the folded sleeve and two other tools (64, 65) which engage the end panels are actuated and themselves actuate the lower tool again when they have reached their predetermined position, so that when final sealing is done, all the tools engage the folded sleeve at the same time.

3. An apparatus for the erection of a folded sleeve (1) open on one side to permit the insertion of a solid, rectangular object such as a book or a cassette, with two side panels (8, 9), two end panels (24, 25) and a spine (3) ; the outer wall of each of the two side panels is hinged to the spine by means of a folding line and the inner wall of each side panel is hinged to the relevant outer wall by means of a further folding line ; both edges of the inner and outer walls of the two side panels have flaps for the formation of the end panels and one of the inner walls has a further spine section hinged to it, wherein the erecting apparatus is equipped with a top clamping tool (40), the bottom edge of which is shaped in the form of a cutting edge and which is able to hold the flat blank — that is folded together along the two folding lines located between the inner and outer walls of the side panels (8, 9) — along the folding lines (5 ; 16) located between the spine (3) and the further spine section (17) on the one hand and the adjacent side panel (9) on the other and wherein a lever (41) is provided which engages the free end of this side panel (9) and which is able to bend the side panel downwards at least slightly from an originally horizontal position, as a result of which the free end of the further spine section (17) moves away from the spine (3) and wherein a wedge-shaped section (42) is provided which can be moved into the gap formed between the spine (3) and the further spine section (17) and wherein furthermore a lever (43) is provided which is able to fold the side panel (9) through 90° and wherein this lever (43) has flaps (44, 45) on either side to fold the end panel flaps (24, 24' ; 25, 25') of this side panel and wherein a further lever (46) is provided which is able to fold the other side panel (8) upwards, also through 90°, and which has flaps (47, 48) to fold the end panel flaps (20, 21 ; 22, 23) of this second side panel.

**Revendications**

1. Procédé pour dresser un emboîtage plié (1) ouvert d'un côté qui est destiné à recevoir un objet rectangulaire solide, comme par exemple un livre ou une cassette, comportant deux parois latérales (8, 9) ainsi que deux parois d'about (24, 25) et un dos (3) auquel une épaisseur extérieure de chacune des deux parois latérales est articulée par l'intermédiaire chaque fois d'une ligne de pliage, étant entendu qu'à chaque épaisseur extérieure est adjointe, par l'intermédiaire d'une ligne de pliage, une épaisseur intérieure de la paroi latérale correspondante, ces parois latérales présentant des pattes destinées à former les parois d'about et l'une d'elles étant pourvue d'une autre épaisseur de dos, de sorte qu'au départ du flan en carton disposé à plat, on rabat tout d'abord les épaisseurs intérieures des parois latérales sur les épaisseurs extérieures associées et l'autre épaisseur de dos sur le dos, caractérisé en ce qu'on amène le flan en carton (2) dont les épaisseurs extérieures sont tournées vers le bas, à un poste de dressage dans lequel il est maintenu suivant une ligne de pliage qui s'étend entre le dos (3) et l'épaisseur extérieure (7) de la première paroi latérale (9) ou entre l'épaisseur de dos (17) et l'épaisseur intérieure (14) de cette paroi latérale, après quoi on plie cette paroi latérale vers le bas de préférence d'environ 30° de sorte qu'entre le dos (3) et l'extrémité libre de l'épaisseur de dos (17) se forme un interstice dans lequel un outil est engagé pour le maintenir ouvert, puis on replie ladite paroi latérale vers le haut et de 90° de sorte que les pattes de parois d'about (24, 24' ; 25, 25') articulées aux deux épaisseurs de parois latérales sont également rabattues vers le haut, tandis que les languettes anti-poussière (52, 53) articulées aux pattes de parois d'about extérieures (24, 25) reliées à l'épaisseur extérieure (7) restent dans leur position horizontale, après quoi ces pattes de parois d'about (24, 24' ; 25, 25') sont également repliées de 90° contre l'autre paroi latérale (8) de sorte que les languettes anti-poussière (52, 53) sont glissées dans l'interstice encore maintenu ouvert entre le dos (3) et l'épaisseur de dos (17), et les pattes de parois d'about (20, 21, 22, 23) de l'autre paroi latérale (8) sont redressées de 90° puis cette seconde paroi latérale (8) est également redressée de 90° de sorte que les pattes de parois d'about (20, 21 et 22, 23) qui y sont articulées sont insérées entre les pattes de parois d'about (24, 24' et 25, 25'), après quoi l'emboîtage est amené à un poste de scellement.

2. Procédé suivant la revendication 1, caractérisé en ce qu'après avoir dressé l'emboîtage on le fait glisser entre deux rails de maintien qui attaquent ses parois latérales (8, 9), un autre rail de maintien étant prévu à la face externe du dos, on introduit ensuite un poinçon supérieur (60) du haut dans l'emboîtage et ce poinçon, au terme de sa première phase d'introduction, provoque l'évacuation latérale du rail de maintien inférieur, après quoi le poinçon supérieur transporte l'emboîtage plus loin et, lorsqu'il atteint sa position d'extrémité inférieure, il enclenche un poinçon inférieur (61) qui vient alors s'appliquer contre le dos de l'emboîtage et enclenche, dans sa position d'appui contre l'emboîtage, deux poinçons de parois latérales (62, 63) qui viennent s'appliquer contre les parois latérales et déclenchent, dans leur position d'extrémité, le poinçon inférieur, de sorte que ce poinçon inférieur est écarté de l'emboîtage et que deux autres poinçons attaquant les parois d'about sont enclenchés, ces derniers poinçons ré-enclenchant, dans leur position d'appui, le poinçon inférieur, de sorte qu'en vue du scellement final, tous les poinçons attaquent simultanément l'emboîtage.

3. Dispositif pour dresser un emboîtage plié (1) ouvert d'un côté qui est destiné à recevoir un objet rectangulaire solide, comme par exemple un livre ou une cassette, comportant deux parois latérales (8, 9) ainsi que deux parois d'about (24, 25) et un dos (3) auquel une épaisseur extérieure de chacune des deux parois latérales est articulée par l'intermédiaire chaque fois d'une ligne de pliage, étant entendu qu'à chaque épaisseur extérieure est adjointe, par l'intermédiaire d'une ligne de pliage, une épaisseur intérieure de la paroi latérale correspondante, ces parois latérales présentant des pattes destinées à former les parois d'about et l'une d'elles étant pourvue d'une autre épaisseur de dos, caractérisé en ce que le dispositif de dressage est pourvu d'un poinçon supérieur (40) dont le bord inférieur a la forme d'un taillant et est à même d'immobiliser le flan à plat, plié suivant les deux lignes de pliage entre les épaisseurs intérieure et extérieure des parois latérales (8, 9), selon la ligne de pliage (5, 16) entre le dos (3) ou l'épaisseur de dos (17) d'une part et la paroi latérale adjacente (9) d'autre part, un levier (41) attaquant l'extrémité libre de cette paroi latérale (9) est prévu et est à même de plier la paroi latérale à partir de l'horizontale au moins légèrement vers le bas, ce qui écarte l'épaisseur de dos (17) par son extrémité libre du dos (3), un coulisseau cunéiforme (42) est prévu et peut être introduit dans l'interstice formé entre le dos (3) et l'épaisseur de dos (17), et un levier (43) est en outre prévu et est à même de rabattre ladite paroi latérale (9) de 90°, étant entendu qu'aux deux côtés de ce levier (43) sont prévus des volets (44, 45) qui servent à rabattre les pattes de parois d'about (24, 24' et 25, 25') de cette paroi latérale, et un levier de support (46) est prévu et est à même de redresser l'autre paroi latérale (8) également de 90° vers le haut, ce levier portant les volets (47, 48) servant à rabattre les pattes de parois d'about (20, 21 ; 22, 23) de cette deuxième paroi latérale.

*Fig.1.*

*Fig.2.*

Fig.3.

Fig.4.

Fig. 5.

Fig. 6.

Fig. 9.

Fig. 10.

Fig. 11.

Fig. 12

Halten u.
Vorwärmen        Siegeln

Oberstempel

Unterstempel

Seitenwandstempel

Stirnwandstempel

6